(19) **Europäisches Patentamt**
**European Patent Office**
**Office européen des brevets**

(11) **EP 1 988 739 B1**

(12) **EUROPEAN PATENT SPECIFICATION**

(45) Date of publication and mention
of the grant of the patent:
**27.04.2011 Bulletin 2011/17**

(51) Int Cl.:
**H04Q 11/04** (2006.01)

(21) Application number: **07845661.3**

(86) International application number:
**PCT/CN2007/003275**

(22) Date of filing: **20.11.2007**

(87) International publication number:
**WO 2008/061449 (29.05.2008 Gazette 2008/22)**

(54) **METHOD AND DEVICE FOR MANAGING A CHANNEL MATRIX**

VERFAHREN UND GERÄT ZUR VERWALTUNG EINER KANALMATRIX

PROCÉDÉ ET DISPOSITIF DE GESTION D'UNE MATRICE DE CANAL

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.11.2006 CN 200610145544**

(43) Date of publication of application:
**05.11.2008 Bulletin 2008/45**

(73) Proprietor: **Huawei Technologies Co., Ltd.**
**Shenzhen, Guangdong Province 518129 (CN)**

(72) Inventors:
• **ZHOU, Jun**
**Shenzhen**
**Guangdong Province 518129 (CN)**
• **LONG, Guozhu**
**Shenzhen**
**Guangdong Province 518129 (CN)**
• **WEI, Dong**
**Shenzhen**
**Guangdong Province 518129 (CN)**
• **FANG, Liming**
**Shenzhen**
**Guangdong Province 518129 (CN)**
• **CHEN, Zihuan**
**Shenzhen**
**Guangdong Province 518129 (CN)**

(74) Representative: **Pfenning, Meinig & Partner GbR**
**Patent- und Rechtsanwälte**
**Theresienhöhe 13**
**80339 München (DE)**

(56) References cited:
**WO-A-02/063813          WO-A-2004/047325**
**WO-A1-03/009541        CN-A- 1 285 672**
**CN-A- 1 524 396           US-A1- 2005 105 473**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to the field of communications, in particular, to a method and a device for managing a channel matrix.

**Background of the Invention**

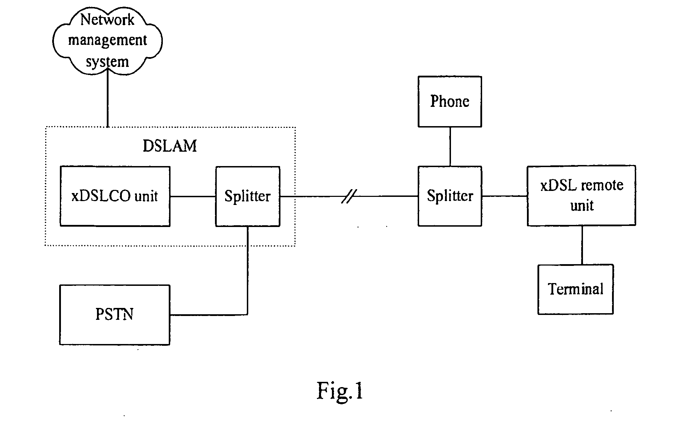

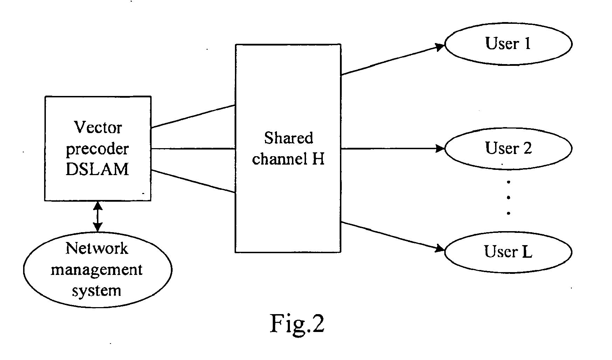

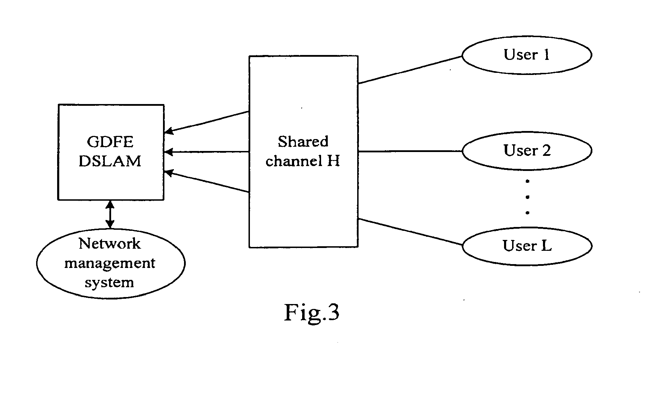

Digital Subscriber Line (xDSL) is a high-speed data transmission technology in which the data is transmitted on Unshielded Twist Pair (UTP) lines. Except for the xDSL based on the baseband transmission such as ISDN DSL (IDSL) and Single-pair High-speed DSL (SHDSL), the xDSL based on the passband transmission employs Frequency Division Duplexing (FDD), so that the xDSL service and the Plain Old Telephone Service (POTS) may coexist on the same twisted pair. The xDSL service occupies the high frequency band and the POTS occupies the baseband below 4KHz. The POTS signal and the xDSL signal are separated by a splitter. The xDSL based on the passband transmission employs the Discrete Multitone Modulation (DMT). The system which provides the multiple xDSL access is called as the Digital Subscriber Line Access Multiplexer (DSLAM). Figure 1 shows the systemic model of the DSLAM.
As a transmission channel, the channel capacity of the phone twist pair must satisfy Shannon's channel capacity

formula: $C = B \cdot \log_2\left(1 + \dfrac{S}{N}\right)$. In the formula, C is the channel capacity, B is the signal bandwidth, S is the signal energy and N is the noise energy, respectively. Therefore, the channel capacity can be improved by improving the signal bandwidth and the signal energy. However, the signal bandwidth depends on the amplitude-frequency characteristic and the signal energy is limited by the device, the spectral compatibility and so on. Thus, the signal bandwidth and the signal energy are both limited to a certain range and hence the transmission capacity of xDSL can not be further improved. However, in view of the noise energy N, the transmission capacity of the lines can be appropriately improved by reducing the noise energy.
With the improvement of the frequency band employed by the xDSL technology, the crosstalk, especially the crosstalk in the high-frequency band, becomes prominent. Because the upstream and downstream channels of xDSL employ the FDMA, the Near-End crosstalk (NEXT) may hardly affect the capacity of the system. However, the Far-End crosstalk (FEXT) will affect the transmission capacity of the transmission line seriously. When a plurality of users based on the same cable requires activating the xDSL service, the FEXT may cause a low speed on some lines, an unstable performance or even an unactivable service. Therefore, the outgoing line ratio of the DSLAM is low.
Presently, the vectored-DSL technology is proposed in the field. The vectored-DSL technology mainly utilizes the possibility of performing the tranceiving coordinately at the DSLAM end and uses the signal processing method to counteract interfere of the FEXT, so that no interfere of the FEXT exists in each signal and the transmission capacity is improved. Figure 2 and Figure 3 show that the DSLAM end sends signals simultaneously and the DSLAM end receives signals simultaneously, respectively.
The shared channel H shown in Figure 2 and Figure 3 may be represented with a matrix in frequency domain as follows.

$$H(f) = [H_{km}(f)]_{k=1\cdots L, m=1\cdots L} = \begin{bmatrix} H_{11}(f) & H_{12}(f) & \cdots & H_{1L}(f) \\ H_{21}(f) & H_{22}(f) & \cdots & H_{2L}(f) \\ \vdots & \vdots & \ddots & \vdots \\ H_{L1}(f) & H_{L2}(f) & \cdots & H_{LL}(f) \end{bmatrix}_{L \times L}$$

In the matrix, $H_{km}(f)$ is an equation representing the transmission from line pair m to line pair k. When m=k, $H_{km}(f)$ represents a direct channel of line pair m, and when $m \neq k$, $H_{km}(f)$ represents a crosstalk channel from line pair m to line pair k. The $X(f)$ is an $L \times 1$ channel input vector, the $Y(f)$ is an $L \times 1$ channel output vector, and $N(f)$ is a noise vector. Therefore, the channel transmission equation is represented as follows.

$$Y(f) = H(f)X(f) + N(f)$$

Because of using FDD technology in DSL, only the FEXT crosstalk is considered. The method for eliminating the crosstalk includes the QR decomposition method and the SVD decomposition method. In vector DSL, the downstream crosstalk is eliminated by the vector transmiter and the upstream crosstalk is eliminated by the vector receiver.

In QR decomposition method, Generalized Decision Feedback Equalization (GDFE) may be used to estimate the input vector X of the user. GDFE is similar to the DFE (a method for eliminating interferes between signals transimitted in a single channel) and can be applied to any channel in the form of $y=Hx+n$.

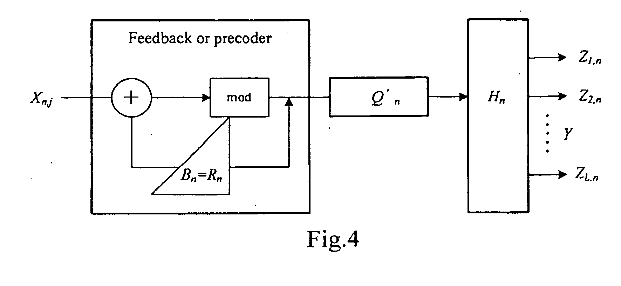

Figure 4 is a diagram showing the downstream vector transmiter, and the detailed process of the downstream vector transmiter is as follows.

1. According to the QR decomposition method, $H^T$ matrix may also be represented as: $\mathbf{H}_i^T = \mathbf{Q}_i \cdot \mathbf{R}_i$ , , and

$\mathbf{R}_i$ is an upper triangular matrix, $\mathbf{Q}_i$ is a unitary matrix, in other words, $\mathbf{Q}_i\mathbf{Q}_i^* = \mathbf{Q}_i^*\mathbf{Q}_i = \mathbf{I}$ , , the superscript * represents the conjugation transpose transformation, and $\mathbf{H}_i^T$ is the transpose matrix of H. Hence, $\mathbf{H}_i = \mathbf{R}_i^T\mathbf{Q}_i^T$ . .

2. Assuming that $\mathbf{x}_i = \mathbf{Q}_i^{T*}\mathbf{x}_i'$ and $\mathbf{x}_i' = \mathbf{R}_i^{-T} diag(\mathbf{R}_i^T)\tilde{\mathbf{x}}_i$ ,, and diag represents the diagonal matrix, then:

$\mathbf{y}_i = \mathbf{H}_i\mathbf{x}_i + \mathbf{N}_i = \mathbf{R}_i^T\mathbf{Q}_i^T\mathbf{Q}_i^{T*}\mathbf{R}_i^{-T} diag(\mathbf{R}_i^T)\tilde{\mathbf{x}}_i + \mathbf{N}_i = diag(\mathbf{R}_i^T)\tilde{\mathbf{x}}_i + \mathbf{N}_i$ .As for a channel without noise, the output is $\hat{\mathbf{y}} = diag(\mathbf{R}_i^T)\tilde{\mathbf{x}}_i$ , which is a diagonal matrix. Therefore, the crosstalk is eliminated.

For example, when L=4,

$\mathbf{H}_i^T = \mathbf{Q}_i\mathbf{R}_i$ ,, and R may be represented as:

$$\mathbf{R} = \begin{bmatrix} R_{11} & R_{12} & R_{13} & R_{14} \\ 0 & R_{22} & R_{23} & R_{24} \\ 0 & 0 & R_{33} & R_{34} \\ 0 & 0 & 0 & R_{44} \end{bmatrix}$$

Assuming that $\mathbf{x}_i = \mathbf{Q}_i^{T*}\mathbf{x}_i'$ and $\mathbf{x}_i' = \mathbf{R}_i^{-T} diag(\mathbf{R}_i^T)\tilde{\mathbf{x}}_i$ , then

$$\mathbf{y}_i = \mathbf{H}_i\mathbf{x}_i + \mathbf{N}_i = \mathbf{R}_i^T\mathbf{Q}_i^T\mathbf{Q}_i^{T*}\mathbf{R}_i^{-T} diag(\mathbf{R}_i^T)\tilde{\mathbf{x}}_i + \mathbf{N}_i = diag(\mathbf{R}_i^T)\tilde{\mathbf{x}}_i + \mathbf{N}_i$$

$$= \begin{bmatrix} R_{11}^T & 0 & 0 & 0 \\ 0 & R_{22}^T & 0 & 0 \\ 0 & 0 & R_{33}^T & 0 \\ 0 & 0 & 0 & R_{44}^T \end{bmatrix} \cdot \tilde{\mathbf{x}}_i + \mathbf{N}_i = \begin{bmatrix} R_{11}^T \tilde{x}_1 & 0 & 0 & 0 \\ 0 & R_{22}^T \tilde{x}_2 & 0 & 0 \\ 0 & 0 & R_{33}^T \tilde{x}_3 & 0 \\ 0 & 0 & 0 & R_{44}^T \tilde{x}_4 \end{bmatrix} + \mathbf{N}_i$$

The outputs for four users are $R_{11}^T \tilde{x}_1, R_{22}^T \tilde{x}_2, R_{33}^T \tilde{x}_3, R_{44}^T \tilde{x}_4$ respectively. Thus, the crosstalk is eliminated.

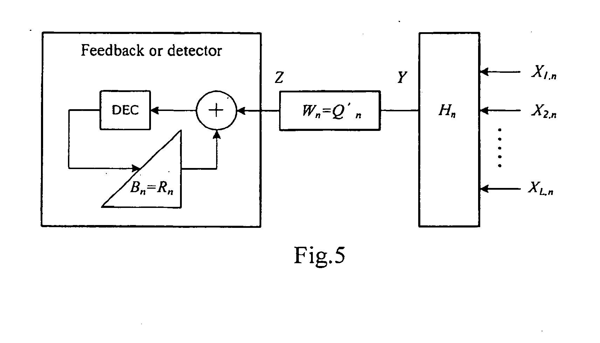

Figure 5 is a diagram showing the upstream vector receiver, and includes the following.

1. According to the QR decomposition method, $H_i$ matrix may also be represented as: $\mathbf{H}_i = \mathbf{Q}_i \cdot \mathbf{R}_i$, and $\mathbf{R}_i$ is an

upper triangular matrix, $\mathbf{Q}_i$ is a unitary matrix, in other words, $\mathbf{Q}_i\mathbf{Q}_i^* = \mathbf{Q}_i^*\mathbf{Q}_i = \mathbf{I}$ , , the superscript * represents the conjugation transpose transformation.

2. The upstream receiving vector is:

$$\mathbf{Y}_i = \mathbf{H}_i \mathbf{x}_i + \mathbf{N}_i$$

Both sides of the above equation are multiplied by $\mathbf{Q}_i^*$, then

$$\hat{\mathbf{Y}}_i = \mathbf{Q}^* (\mathbf{H}_i \mathbf{x}_i + \mathbf{N}_i)$$

$$\hat{\mathbf{Y}}_i = \mathbf{Q}_i^* \bullet \mathbf{Q}_i \bullet \mathbf{R}_i \mathbf{x}_i + \mathbf{Q}_i^* \bullet \mathbf{N}_i = \mathbf{R}_i \mathbf{x}_i + \mathbf{Q}_i^* \bullet \mathbf{N}_i .$$

As shown in the above equation, when a channel is a channel without noise, the output is $\mathbf{Y}_i = \mathbf{R}_i \mathbf{x}_i$, $1 \leq i \leq L$. $\mathbf{R}_i$ is an upper triangular matrix.

3. The output value may be estimated by GDFE. As can be seen, the Lth output has a value without the crosstalk and the Lth output value may be obtained with a simple decoder. As for the (L-1)th output, the crosstalk on the (L-1)th line from the Lth line is eliminated by subtracting the Lth estimated result from the (L-1)th output. Through a simple estimation, the (L-1)th output value may be obtained. In the similar manner, the first output value may be obtained by subtracting the previous estimated value one by one. Thus, the crosstalk between lines is eliminated.

For example, when L=4,

$\mathbf{H}_i = \mathbf{Q}_i \mathbf{R}_i$, and $\mathbf{R}_i$ may be represented as:

$$\mathbf{R}_i = \begin{bmatrix} R_{11} & R_{12} & R_{13} & R_{14} \\ 0 & R_{22} & R_{23} & R_{24} \\ 0 & 0 & R_{33} & R_{34} \\ 0 & 0 & 0 & R_{44} \end{bmatrix}$$

As for $\mathbf{Y}_i = \mathbf{H}_i \mathbf{x}_i + \mathbf{N}_i$, both sides of the equation are multiplied by $\mathbf{Q}_i^*$, then

$$\hat{\mathbf{Y}}_i = \mathbf{Q}_i^* \bullet \mathbf{Q}_i^* \bullet \mathbf{R}_i \mathbf{x}_i + \mathbf{Q}_i^* \bullet \mathbf{N}_i = \mathbf{R}_i \mathbf{x}_i + \mathbf{Q}_i^* \bullet \mathbf{N}_i = \begin{bmatrix} R_{11} & R_{12} & R_{13} & R_{14} \\ 0 & R_{22} & R_{23} & R_{24} \\ 0 & 0 & R_{33} & R_{34} \\ 0 & 0 & 0 & R_{44} \end{bmatrix} \cdot \mathbf{x}_i + \mathbf{Q}_i^* \mathbf{N}_i ;$$

as for a channel without noise,

$$\hat{\mathbf{Y}}_i = \begin{bmatrix} R_{11} & R_{12} & R_{13} & R_{14} \\ 0 & R_{22} & R_{23} & R_{24} \\ 0 & 0 & R_{33} & R_{34} \\ 0 & 0 & 0 & R_{44} \end{bmatrix} \cdot \begin{bmatrix} x_1 \\ x_2 \\ x_3 \\ x_4 \end{bmatrix} = \begin{bmatrix} R_{11}x_1 + R_{12}x_2 + R_{12}x_3 + R_{14}x_4 \\ R_{22}x_2 + R_{23}x_3 + R_{24}x_4 \\ R_{33}x_3 + R_{34}x_4 \\ R_{44}x_4 \end{bmatrix}$$

As can be seen, the fourth output has a value without the crosstalk, and the fourth user output value may be estimated through a simple decoder. The crosstalk on the third user from the fourth user is eliminated by subtracting the fourth estimated result from the third output. Through a simple estimation, the third user output value is obtained. In the similar manner, the first user output value may be obtained by subtracting the previous estimated value one by one. Thus, the crosstalk is eliminated.

During implementing the present invention, the inventor observes that the prior art at least has the following disadvantages.

The user channel information is required for eliminating the crosstalk. However, when a user logs on, the user may cause the crosstalk on other user channel. Because the crosstalk cancellation device (or, the precoder) is calculated from the user channel information obtained by matrix H before the user logs on, the balance is broken and the crosstalk eliminating capacity is lowered.

In order to increase the speed rate and stablbility of lines, a method is disclosed by WO 2004/047325A, named "Automated system and method for management of digital subscriber lines", for managing digital subscriber lines (DSL) in a telephone network, especially optimizing the transmit power spectral density (PSD) by applying the "waterfilling" technique.

## Summary of the Invention

Embodiments of the present invention provide a method and a device for managing a channel matrix, so as to update the channel matrix and eliminate crosstalk timely and correctly.

Embodiments of the present invention provide a method for managing a channel matrix, and the method is applicable to update the DSL channel matrix. The method for managing a channel matrix includes:

obtaining whether a user logs on or not;

when the user logs on, adding a history record of channel information of the user to a channel matrix from a database; and

when the user logs off, recording current channel information of the user in the channel matrix to the database and deleting the channel information of the user from the channel matrix.

Embodiments of the present invention provide a device for managing a channel matrix, and the device is applicable to update the DSL channel matrix. The device for managing a channel matrix includes an obtaining unit, a storage unit, a channel matrix unit and a management unit, in which

the storage unit is adapted to store a history record of channel information of users;

the channel matrix unit is adapted to store a channel matrix comprising channel information of a current logging on user;

the obtaining unit is adapted to obtain whether the user logs on or not and send an indication for indicating that the user logs on to the management unit when it is obtained that the user logs on, or send an indication for indicating that the user logs off to the management unit when it is obtained that the user logs off; and

the management unit is adapted to add the history record of the channel information of the user to the channel matrix according to the indication for indicating that the user logs on, and record the channel information of the user in the channel matrix into the storage unit and delete the channel information of the user from the channel matrix according to the indication for indicating that the user logs off.

According to the embodiments of the present invention, the history record of the user channel information is added to the channel matrix when the user logs on; and the user channel information in the channel matrix is recorded when the user logs off. Therefore, the channel matrix is updated timely according as whether the user logs on or not. The problems in the prior art, including the channel matrix can not be updated timely and correctly according as whether the user logs on or not and thus the crosstalk eliminating capacity is lowered, and are solved by updating the channel matrix timely and correctly. Hence, the crosstalk eliminating capacity is improved during implementing the crosstalk elimination.

## Brief Description of the Drawings

Figure 1 is a schematic diagram illustrating a reference model of an xDSL system;

Figure 2 is a schematic diagram illustrating the technology of the prior art in which the transmitting is performed coordinately at the DSLAM end and the receiving is performed separately at the user end;

Figure 3 is a schematic diagram illustrating the technology of the prior art in which the transmitting is performed separately at the user end and the receiving is performed coordinately at the DSLAM end;

Figure 4 is a schematic diagram illustrating the downstream crosstalk transmitter in the prior art; .

Figure 5 is a schematic diagram illustrating the upstream crosstalk receiver in the prior art;

Figure 6 is a flow chart illustrating the process for managing the channel matrix H according to an embodiment of the present invention; and

Figure 7 is a schematic diagram illustrating the device for managing the channel matrix according to an embodiment of the present invention.

**Detailed Description of the Embodiments**

For the channel crosstalk of the DSL user, embodiments of the present invention provide a simple and effective method for managing a channel matrix dynamically, so that the crosstalk counteract capability is ensured. Hereinafter, detailed descriptions on certain embodiments of the present invention will be provided by reference to the drawings.

The user logs on or logs off may cause two problems. The first lies in how to obtain whether the user logs on or not timely. The second lies in how to update the channel matrix timely after the user logs on or off so as to eliminate the crosstalk according to the information in the channel matrix.

As for the first problem i.e. how to obtain whether the user logs on or not timely, in the vectored-DSL technology, because the crosstalk cancellation is performed at the central office (CO) end through tranceiving process coordinately for all users, a uniform management is performed for all users by the CO end. Thus, through the DSLAM management layer at the CO end, whether the user logs on or not can be directly obtained.

As for the second problem i.e. how to update the channel matrix timely after the user logs on or off, because the user logs on and then the balance is broken, it is expected that the channel information (the direct channel and the crosstalk channel) of the logging on user can be obtained and be added into the channel matrix timely and rapidly, so as to counteract the crosstalk caused by the logging on user and the crosstalk on the logging on user from other users. According to an embodiment of the present invention, a database is configured at the CO end for storing the history record of the channel information for all users. When a user logs on, the history record of the channel information of the user is read from the database and added in to the channel matrix. When a user logs off, the channel information of the user in the channel matrix is stored in the database. Because the channel varies slowly with respect to time, the channels are tracked and ajusted and the channel information of the user is updated according to the result of the adjustment. When the user logs off, the current channel information of the user is stored into the database so as to be used in the next time.

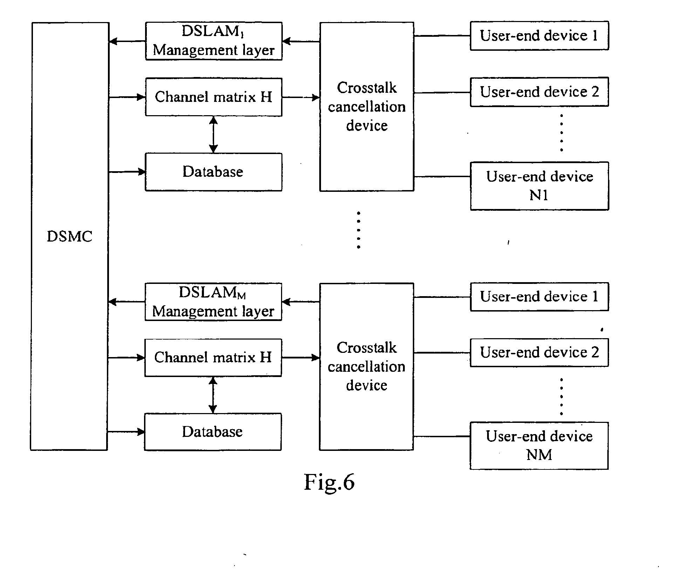

Figure 6 is a flow chart illustrating the process for managing the channel matrix H according to an embodiment of the present invention.

With reference to Figure 6, the process for managing the channel matrix H according to an embodiment of the present invention is shown. In Figure 6, the DSLAM management layer is responsible for obtaining whether the user logs on or off, the DSMC is a Dynamic Spectrum Management (DSM) Center and is responsible for the management of channel matrix H and the database. Particularly, the management for the matrix H includes the following.

Firstly, the DSLAM management layer obtains whether the user logs on or off. Because all users are managed collectively at the CO end, the DSLAM management layer can obtains the operation status of the user and can obtains whether the user logs on or off .

When the DSLAM management layer obtains that user 1 logs off, the DSLAM management layer sends the information that user 1 logs off to the DSMC. When the DSMC obtains that user 1 logs off, the DSMC stores the channel information of the user into the database. Thus, when the user logs on next time, the history record of the channel information stored in the database is used to update the channel matrix H. In addition, the DSMC delete the channel information of the user from the channel matrix H.

For example, if current channel matrix H (i.e. user channel information matrix) is as follows:

$$\begin{bmatrix} H_{11}(f) & H_{12}(f) & \cdots & H_{1L}(f) \\ H_{21}(f) & H_{22}(f) & \cdots & H_{2L}(f) \\ \vdots & \vdots & \ddots & \vdots \\ H_{L1}(f) & H_{L2}(f) & \cdots & H_{LL}(f) \end{bmatrix}_{L \times L}$$

and **L** represents the number of current logging on users,

the user channel information stored in the database in the form of array is as follows:

$$\begin{bmatrix} H_{11}{}'(f) & H_{12}{}'(f) & \cdots & H_{1M}{}'(f) \\ H_{21}{}'(f) & H_{22}{}'(f) & \cdots & H_{2M}{}'(f) \\ \vdots & \vdots & \ddots & \vdots \\ H_{M1}{}'(f) & H_{M2}{}'(f) & \cdots & H_{MM}{}'(f) \end{bmatrix}_{M \times M}$$

and M represents the number of the users connected with the DSLAM and $M \geq L$.

When user 1 logs off, the direct channel information and the crosstalk channel information of user 1 in matrix H (the crosstalk channel of user 1 including the crosstalk channel for other users caused by user 1 and the crosstalk channel for user 1 caused by other users) is stored in the database, in other words, the original channel information of user 1 in the database, i.e. $H_{1m}{}'(f)(O{=}1,... L)$ and $H_{m1}{}'(f)(m{=}1,...L)$, is replaced with $H_{1m}(f)(m{=}1,... L)$ and $H_{m1}(f)(m{=}1,...L)$. The direct channel information and the crosstalk channel information of user 1 is deleted from the channel matrix H, and the updated channel matrix H is as follows:

$$\begin{bmatrix} H_{22}(f) & H_{23}(f) & \cdots & H_{2L}(f) \\ H_{32}(f) & H_{33}(f) & \cdots & H_{3L}(f) \\ \vdots & \vdots & \ddots & \vdots \\ H_{L2}(f) & H_{L3}(f) & \cdots & H_{LL}(f) \end{bmatrix}_{(L-1) \times (L-1)}$$

Then, the DSLAM management layer at CO end monitors the operation status of the user. For each logging off user, the channel matrix H and the database information are updated in accordance with the above process flow. The CO end tracks and adjusts the channels of all logging on users and updates the channel matrix H according to the result of the adjustment.

When the CO end obtains that user 1 logs on, the CO end sends the information that user 1 logs on to the DSMC.

When the DSMC obtains that user 1 logs on, the DSMC adds the channel information of user 1 in the database to the channel matrix H to update the matrix H. For example, the channel matrix H before user 1 logs on is as follows:

$$\begin{bmatrix} H_{22}(f) & H_{23}(f) & \cdots & H_{2L}(f) \\ H_{32}(f) & H_{33}(f) & \cdots & H_{3L}(f) \\ \vdots & \vdots & \ddots & \vdots \\ H_{L2}(f) & H_{L3}(f) & \cdots & H_{LL}(f) \end{bmatrix}_{(L-1) \times (L-1)}$$

and L-1 represents the number of all logging on users.

The user channel information stored in the database in the form of array is as follows:

$$\begin{bmatrix} H_{11}{}'(f) & H_{12}{}'(f) & \cdots & H_{1M}{}'(f) \\ H_{21}{}'(f) & H_{22}{}'(f) & \cdots & H_{2M}{}'(f) \\ \vdots & \vdots & \ddots & \vdots \\ H_{M1}{}'(f) & H_{M2}{}'(f) & \cdots & H_{MM}{}'(f) \end{bmatrix}_{M \times M}$$

and M represents the number of the users connected with the DSLAM and $M \geq L$.

When user 1 logs on, the channel information of user 1 in the database i.e. $H_{im}(f)(m{=}1,... L)$ and $H_{m1}{}'(f)(m{=}1,... L)$, is added into the channel matrix.

Thus, the channel matrix is updated as:

$$\begin{bmatrix} H_{11}'(f) & H_{12}'(f) & \cdots & H_{1L}'(f) \\ H_{21}'(f) & H_{22}(f) & \cdots & H_{2L}(f) \\ \vdots & \vdots & \ddots & \vdots \\ H_{L1}'(f) & H_{L2}(f) & \cdots & H_{LL}(f) \end{bmatrix}_{L \times L}$$

Because the channel varies slowly with respect to time, the user channels may be tracked and adjusted after the user channel information is added into matrix H. The history data of the user channel information is introduced, and the history data is the channel information when the user logs off last time. The difference between the history data and current channel is not large, and the history data may gradually approach current channel information of the user through the tracking and adjustment. Thus, the correctness of the channel matrix is ensured and the crosstalk elimination performance is ensured.

The CO end updates the channel matrix H for each logging on user in accordance with the above process flow.

If the CO end connects with a plurality of users, only one DSLAM is insufficient. In general, the CO end includes a plurality of DSLAMs. Each DLSAM sends the obtained information regarding whether the user logs on or not to the DSMC. The DSMC will update the channel matrix H according to the information regarding whether the user logs on or not reported by each DSLAM in accordance with the above process flow.

The channel matrix H is used for eliminating the crosstalk, in other words, for eliminating the crosstalk generated when the user logs on or off. The method for eliminating the crosstalk includes the QR decomposition method and the SVD decomposition method.

Based on the same technical concept as the above dynamic management channel matrix, embodiments of the present invention further provide a device for managing the channel matrix.

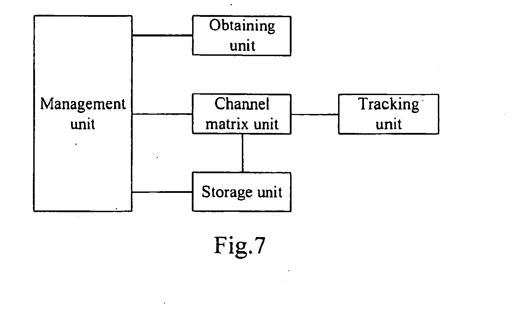

Figure 7 is a schematic diagram illustrating the device for managing the channel matrix according to an embodiment of the present invention. The device locates at the CO end and includes: an obtaining unit, a storage unit, a channel matrix unit, a management unit and a fine adjustment unit.

The obtaining unit is a DSLAM management entity and is adapted to obtain whether the user logs on or not, sends an indication for indicating that the user logs on to the management unit when it is obtained that the user logs on, or sends an indication for indicating that the user logs off to the management unit when it is obtained that the user logs off.

The management unit is adapted to add a history record of user channel information (the history record of the channel information when the user logs off last time) to the channel matrix of the channel matrix unit according to the indication for indicating that the user logs on sent from the obtaining unit, and record the user channel information in the channel matrix of the channel matrix unit into the storage unit and delete the user channel information from the channel matrix according to the indication for indicating that the user logs off sent from the obtaining unit.

The storage unit is adapted to store the history record of the user channel information. The storage unit is a database storage unit adapted to store the history record of the user channel information into the database.

The channel matrix unit is adapted to store the user channel matrix for a current logging on user.

The tracking and adjustment unit is adapted to track and adjust channels of the logging on user and send the result of the adjusted result to the channel matrix unit to update the channel matrix.

If the CO end connects with a plurality of users, only one DSLAM is insufficient. In general, the CO end includes a plurality of DSLAMs. Each DSLAM is responsible for a number of user channels and corresponds to a channel matrix. Thus, each DSLAM corresponds to one channel matrix management device as described above.

The channel matrix unit may connect with a crosstalk elimination device. The crosstalk elimination device uses the channel matrix to implement the crosstalk elimination with QR decomposition method, SVD decomposition method and so on.

As stated above, according to the embodiments of the present invention, the DSLAM management layer can obtain whether a user logs on or off and manage the channel matrix based thereupon. When it is obtained that a user logs off, the channel information of the user is deleted from the channel matrix and is stored in the database so as to be used for the next time when the user logs on. When it is obtained that a user logs on, the channel information of the user is read from the database and is added into the channel matrix, thus the channel matrix is timely updated according as whether the user logs on or off. Hence, the affection on the crosstalk eliminating capacity caused by the user logs on or logs off can be avoided by updating the channel matrix timely. In addition, the method and system according to the embodiments of the present invention is simple and easy to be implemented.

Additional advantages and modifications will readily occur to those skilled in the art. Therefore, the invention in its broader aspects is not limited to the specific details and representative embodiments shown and described herein.

Accordingly, various modifications and variations may be made without departing from the scope of the invention as defined by the appended claims and their equivalents.

**Claims**

1. A method for managing a Digital Subscriber Line channel matrix, comprising:

   obtaining whether a user logs on or not;
   when the user logs on, adding a history record of channel information of the user to a channel matrix from a database; and
   when the user logs off, recording current channel information of the user in the channel matrix to the database and deleting the channel information of the user from the channel matrix.

2. The method according to claim 1, wherein the history record of the channel information of the user is channel information when the user logged off last time.

3. The method according to claim 1 or 2, further comprising:

   performing a tracking to a channel of the user in the channel matrix, and updating the channel information of the user in the channel matrix with adjusted channel information.

4. The method according to claim 1, wherein the channel information of the user comprises direct channel information of the user and crosstalk channel information caused by the user for other users, as well as crosstalk channel information caused by other users for the user.

5. The method according to one of claims 1 to 4, wherein, the obtaining whether the user logs on or not comprises:
   obtaining whether the user logs on or not by a Digital Subscriber Line Access Multiplex management layer of a Central Office end.

6. The method according to one of claims 1 to 5, further comprising:

   eliminating the crosstalk on a channel of the user according to the channel matrix.

7. The method according to claim 6, wherein, the eliminating the crosstalk on a channel of the user according to the channel matrix comprises:

   eliminating the crosstalk between users with QR decomposition method or singular value decomposition method according to the channel matrix.

8. A device for managing a Digital Subscriber Line channel matrix, comprising an obtaining unit, a storage unit, a channel matrix unit and a management unit, wherein,
   the storage unit is adapted to store a history record of channel information of a user;
   the channel matrix unit is adapted to store a channel matrix comprising channel information of a current logging on user;
   the obtaining unit is adapted to obtain whether the user logs on or not and send an indication for indicating that the user logs on to the management unit when it is obtained that the user logs on, or send an indication for indicating that the user logs off to the management unit when it is obtained that the user logs off; and
   the management unit is adapted to add the history record of the channel information of the user to the channel matrix according to the indication for indicating that the user logs on, and record the channel information of the user in the channel matrix into the storage unit and delete the channel information of the user from the channel matrix according to the indication for indicating that the user logs off.

9. The device according to claim 8, wherein, the storage unit is a database storage unit.

10. The device according to claim 8 or 9, wherein, the obtaining unit is a Digital Subscriber Line Access Multiplex management layer entity.

11. The device according to claim 8, wherein, the management unit is a Dynamic Spectrum Management center.

12. The device according to one of claims 8 to 11, further comprising a tracking unit adapted to track channels of logging on uses and send adjusted channel information to the channel matrix unit to update the channel information of the logging on users in the channel matrix.

13. A computer program product comprising computer program codes, wherein, an execution unit in a computer implements a process as claimed in one of claims 1 to 7 when an execution unit in a computer executes the computer program codes.

14. A computer readable media, comprising computer program codes according to claim 13.

**Patentansprüche**

1. Verfahren zum Verwalten einer Kanalmatrix des digitalen Teilnehmeranschlusses, mit den folgenden Schritten:

   Bestimmen, ob sich ein Benutzer anmeldet oder nicht;
   wenn sich der Benutzer anmeldet, Hinzufügen einer historischen Aufzeichnung von Kanalinformationen des Benutzers zu einer Kanalmatrix aus einer Datenbank; und
   wenn sich der Benutzer abmeldet, Aufzeichnen von aktuellen Kanalinformationen des Benutzers in der Kanalmatrix in der Datenbank und Löschen der Kanalinformationen des Benutzers aus der Kanalmatrix.

2. Verfahren nach Anspruch 1, wobei die historische Aufzeichnung der Kanalinformationen des Benutzers Kanalinformationen, wann sich der Benutzer das letzte Mal abgemeldet hat, sind.

3. Verfahren nach Anspruch 1 oder 2, ferner mit den folgenden Schritten:

   Ausführen eines Tracking an einem Kanal des Benutzers in der Kanalmatrix und
   Aktualisieren der Kanalinformationen des Benutzers in der Kanalmatrix mit justierten Kanalinformationen.

4. Verfahren nach Anspruch 1, wobei die Kanalinformationen des Benutzers Direktkanalinformationen des Benutzers und Übersprechkanalinformationen, die durch den Benutzer für andere Benutzer verursacht werden, sowie Übersprechkanalinformationen, die durch andere Benutzer für den Benutzer verursacht werden, umfassen.

5. Verfahren nach einem der Ansprüche 1 bis 4, wobei das Bestimmen, ob sich der Benutzer anmeldet oder nicht, Folgendes umfasst: Bestimmen, ob sich der Benutzer anmeldet oder nicht, durch eine Verwaltungsschicht des Zugangskonzentrators des digitalen Teilnehmeranschlusses eines Vermittlungsstellenendes.

6. Verfahren nach einem der Ansprüche 1 bis 5, ferner mit dem folgenden Schritt:

   Beseitigen des Übersprechens auf einem Kanal des Benutzers gemäß der Kanalmatrix.

7. Verfahren nach Anspruch 6, wobei das Beseitigen des Übersprechens auf einem Kanal des Benutzers gemäß der Kanalmatrix Folgendes umfasst:

   Beseitigen des Übersprechens zwischen Benutzern mit einem QR-Zerlegungsverfahren oder Singulärwert-Zerlegungsverfahren gemäß der Kanalmatrix.

8. Einrichtung zum Verwalten einer Kanalmatrix des digitalen Teilnehmeranschlusses, die eine Bestimmungseinheit, eine Speichereinheit, eine Kanalmatrixeüiheit und eine Verwaltungseinheit umfasst, wobei
die Speichereinheit dafür ausgelegt ist, eine historische Aufzeichnung von Kanalinformationen eines Benutzers zu speichern;
die Kanalmatrixeinheit dafür ausgelegt ist, eine Kanalmatrix zu speichern, die Kanalinformationen eines aktuellen sich anmeldenden Benutzers umfasst;
die Bestimmungseinheit dafür ausgelegt ist zu bestimmen, ob sich der Benutzer anmeldet oder nicht, und eine Indikation zur Angabe, dass sich der Benutzer anmeldet, zu der Verwaltungseinheit zu senden, wenn bestimmt wird, dass sich der Benutzer anmeldet, oder eine Indikation zur Angabe, dass sich der Benutzer abmeldet, zu der Verwaltungseinheit zu senden, wenn bestimmt wird, dass sich der Benutzer abmeldet; und
die Verwaltungseinheit dafür ausgelegt ist, gemäß der Indikation zur Angabe, dass sich der Benutzer anmeldet, die historische Aufzeichnung der Kanalinformationen des Benutzers zu der Kanalmatrix hinzuzufügen, und gemäß der Indikation zur Angabe, dass sich der Benutzer abmeldet, die Kanalinformationen des Benutzers in der Kanalmatrix in der Speichereinheit aufzuzeichnen und die Kanalinformationen des Benutzers aus der Kanalmatrix zu löschen.

**9.** Einrichtung nach Anspruch 8, wobei die Speichereinheit eine Datenbank-Speichereinheit ist.

**10.** Einrichtung nach Anspruch 8 oder 9, wobei die Bestimmungseinheit eine Verwaltungsschichtentität des Zugangskonzentrators des digitalen Teilnehmeranschlusses ist.

**11.** Einrichtung nach Anspruch 8, wobei die Verwaltungseinheit eine Zentrale für dynamische Spektrumverwaltung ist.

**12.** Einrichtung nach einem der Ansprüche 8 bis 11, die ferner eine Tracking-Einheit umfasst, die dafür ausgelegt ist, Kanäle von sich anmeldenden Benutzern zu verfolgen und justierte Kanalinformationen zu der Kanalmatrixeinheit zu senden; um die Kanalinformationen der sich anmeldenden Benutzer in der Kanalmatrix zu aktualisieren.

**13.** Computerprogrammprodukt, das Computerprogrammcodes umfasst, wobei eine Ausführungseinheit in einem Computer einen Prozess nach einem der Ansprüche 1 bis 7 implementiert, wenn eine Ausführungseinheit in einem Computer die Computerprogrammcodes ausführt.

**14.** Computerlesbares Medium, das Computerprogrammcodes nach Anspruch 13 umfasst.

## Revendications

**1.** Procédé de gestion d'une matrice de canal de Ligne d'Abonné Numérique, comprenant :

Le fait de déterminer qu'un utilisateur se connecte ou non ;
quand l'utilisateur se connecte, l'ajout d'un enregistrement d'historique d'informations de canal de l'utilisateur à une matrice de canal depuis une base de données ; et
quand l'utilisateur se déconnecte, l'enregistrement d'informations de canal courantes de l'utilisateur figurant dans la matrice de canal dans la base de données et la suppression des informations de canal de l'utilisateur dans la matrice de canal.

**2.** Procédé selon la revendication 1, dans lequel l'enregistrement d'historique des informations de canal de l'utilisateur est constitué d'informations de canal à la dernière déconnexion de l'utilisateur.

**3.** Procédé selon la revendication 1 ou 2, comprenant en outre :

l'exécution d'un suivi d'un canal de l'utilisateur dans la matrice de canal, et l'actualisation des informations de canal de l'utilisateur dans la matrice de canal avec des informations de canal ajustées.

**4.** Procédé selon la revendication 1, dans lequel les informations de canal de l'utilisateur comprennent des informations de canal direct de l'utilisateur et des informations de canal de diaphonie causées par l'utilisateur à l'égard d'autres utilisateurs, ainsi que des informations de canal de diaphonie causées par d'autres utilisateurs à l'égard de l'utilisateur.

**5.** Procédé selon l'une quelconque des revendications 1 à 4, dans lequel le fait de déterminer que l'utilisateur se connecte ou non comprend : le fait de déterminer que l'utilisateur se connecte ou non par une couche de gestion de Multiplexage d'Accès de Ligne d'Abonné Numérique d'une extrémité de Central.

**6.** Procédé selon l'une quelconque des revendications 1 à 5, comprenant en outre :

l'élimination de la diaphonie sur un canal de l'utilisateur en fonction de la matrice de canal.

**7.** Procédé selon la revendication 6, dans lequel l'élimination de la diaphonie sur un canal de l'utilisateur en fonction de la matrice de canal comprend ; l'élimination de la diaphonie entre les utilisateurs avec un procédé de décomposition QR ou un procédé de décomposition en valeurs simples en fonction de la matrice de canal.

8. Dispositif de gestion d'une matrice de canal de Ligne d'Abonné Numérique, comprenant une unité de détermination, une unité de stockage, une unité de matrice de canal et une unité de gestion, dans lequel :

l'unité de stockage est adaptée pour stocker un enregistrement d'historique d'informations de canal d'un utilisateur ;
l'unité de matrice de canal est adaptée pour stocker une matrice de canal comprenant des informations de canal d'un utilisateur connecté courant ;
l'unité de détermination est adaptée pour déterminer que l'utilisateur se connecte ou
non et envoyer une indication indiquant que l'utilisateur se connecte à l'unité de gestion quand il est déterminé que l'utilisateur se connecte, ou envoyer une indication indiquant que l'utilisateur se déconnecte à l'unité de gestion quand il est déterminé que l'utilisateur se déconnecte ; et
l'unité de gestion est adaptée pour ajouter l'enregistrement d'historique des informations de canal de l'utilisateur à la matrice de canal en fonction de l'indication indiquant que l'utilisateur se connecte, et enregistrer les informations de canal de l'utilisateur se trouvant dans la matrice de canal dans l'unité de stockage et supprimer les informations de canal de l'utilisateur de la matrice de canal en fonction de l'indication indiquant que l'utilisateur se déconnecte.

9. Dispositif selon la revendication 8, dans lequel l'unité de stockage est une unité de stockage de base de données.

10. Dispositif selon la revendication 8 ou 9, dans lequel l'unité de détermination est une entité de couche de gestion de Multiplexage d'Accès de Ligne d'Abonné Numérique.

11. Dispositif selon la revendication 8, dans lequel l'unité de gestion est un centre de Gestion de Spectre Dynamique.

12. Dispositif selon l'une quelconque des revendications 8 à 11, comprenant en outre une unité de suivi adaptée pour suivre les canaux d'utilisateurs connectés et envoyer les informations de canaux ajustées à l'unité de matrice de canal afin d'actualiser les informations de canal des utilisateurs connectés dans la matrice de canal.

13. Produit de programme informatique comprenant des codes de programme informatique, dans lequel une unité d'exécution dans un ordinateur met en oeuvre un processus selon l'une quelconque des revendications 1 à 7, quand une unité d'exécution dans un ordinateur exécute les codes de programme informatique.

14. Support lisible par ordinateur, comprenant des codes de programme informatique selon la revendication 13.

Fig.1

Fig.2

Fig.3

Fig.4

Feedback or detector

DEC

$W_n = Q'_n$

$B_n = R_n$

$Z$

$Y$

$H_n$

$X_{1,n}$

$X_{2,n}$

$X_{L,n}$

Fig.5

Fig.6

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004047325 A